# EUROPEAN PATENT APPLICATION

(11) **EP 0 635 846 A1**
(43) Date of publication of application: **25.01.1995**
(21) Application number: 94305304.1
(22) Date of filing: 19.07.1994
(51) Int. Cl.: G21C 3/62

(54) **Method for manufacturing nuclear fuel pellet**

(30) Priority: 23.07.1993 JP 182611/93
(71) Applicant: DORYOKURO KAKUNENRYO KAIHATSU JIGYODAN, Minato-ku Tokyo 107 (JP)
(72) Inventor: Nakajima, Yasuo, Tokyo 166 (JP); Morihira, Masayuki, Naka-gun, Ibaraki (JP); Takahashi, Kuniaki, Naka-gun, Ibaraki (JP); Iimura, Naoto, Hitachioota-shi, Ibaraki (JP); Wada, Tutomu, Hitachioota-shi, Ibaraki (JP); Kashimura, Motoaki, Katsuta-shi, Ibaraki (JP); Tezuka, Takeshi, Katsuta-shi, Ibaraki (JP)
(74) Representative: Cross, Rupert Edward Blount

(57) **Abstract**

A method for manufacturing a nuclear fuel pellet having little dispersion of density. Crystal cellulose is used as density lowering agent having a high melting point, so as not to be subject to the transformation due to the melt and thermal decomposition caused by heat generation and accumulation of plutonium in a mixture with plutonium powder. As a result, the dispersion of the pellet density can be significantly reduced.

## Description

### BACKGROUND OF THE INVENTION

### 1. Field of the Invention:

The present invention relates to a method for manufacturing a nuclear fuel pellet to be used in an atomic reactor.

### 2. Description of the Related Art:

It is common practice to use a nuclear fuel pellet in nuclear power generation. The nuclear fuel pellet is several millimeters in diameter and has approximately the same height as the diameter. A number of such pellets constitute a fuel rod by being layered inside a covered tube made of stainless steel, for example.

Fission of nuclear matter in nuclear fuel generally yields gaseous fission products (FP gas), which would become a factor in limitation the life of the fuel in the reactor because it swells the fuel pellet. For suppressing this undesirable effect of the FP gas, it is necessary to form a number of small hollows (hereinafter referred to as pores) for accumulating the gas therein in the pellet. Each pore has, for example, a dimension from several tens to several hundreds micrometers. Such pores formed in the pellets would act to obstruct the swelling of the fuel pellet caused by the FP gas. A pellet having the pores has low density, so as to be generally referred to as a low-density pellet.

There have been proposed several methods for controlling the density during the manufacture of the nuclear fuel pellet. Among them the most normal and already practiced one comprises the steps of: adding spheroidized organic material to raw material powder; pressing this mixed powder to form green pellets; dewaxing these green pellets under reductive atmosphere approximately at 800°C to form pores in dewaxed green pellets; and sintering the dewaxed green pellets. To be suitable as a density lowering agent to be used for such a method, the following conditions must be satisfied : 1), to be a material not to react with a raw material powder; 2), to be easily removed during the dewaxing process; 3), to be adjustable into a predetermined shape and dimension; 4), not to easily adsorb moisture or gas; and 5), not to easily aggregate.

For meeting the aforementioned five requirements, there are practically and experimentally used, for example, polyethylene, aromatic carboxylic acid, or higher fatty acid substances like glycerol-trihydroxy-stearate.

In the aforementioned density lowering agent, however, the following problems would become unavoidable because of their low melting point of approximately 140°C. Namely, in using oxide fuel containing a large amount of plutonium or even when the plutonium content is small if the amount of the powder is large, a temperature of the central portion of the raw material powder to be used becomes higher than 100°C due to the heat generated by spontaneous fission of the plutonium or the low heat conductivity of the powder. In these cases, using aforementioned types of density lowering agents would cause melting or thermal decomposition by the effect of the heat so as to decrease the density lowering function. For example, when approximately 20 kg of mixed powder of uranium dioxide and plutonium dioxide containing approximately 20% of plutonium is formed as a lump, the temperature of the central portion of the lump would reach about 180°C. In such a case, if a density lowering agent consists from aforementioned organic materials having low melting point is used, while desirable density lowering effect could be obtained near the surface of the mixed powder due to its low temperature, near the central portion of the powder the normal density lowering effect would be lost due to the melting of the density lowering agent. Pressing the powder of such a state would often produce a green pellet with the density lowering agent being totally melted, with the density lowering agent being totally in a desirable normal state, or with the density descendant being partly melted and partly not melted in the same green pellet. When such a green pellet is sintered after being dewaxed, i.e. evaporating and removing the density lowering agent, there would arise a significant dispersion of the density between the pellets due to the deterioration of the density lowering effect of the melted density lowering agent, resulting in reduction of yield.

In view of the above, there has been also reported that diamine oxalate can be used as a density lowering agent which can meet the previously mentioned five requirements. The diamine oxalate has a high melting point of 418°C, so as not to cause the problem of above-mentioned density dispersion, however, it disadvantageously gives off cyan-type decomposition gas during the dewaxing process.

### SUMMARY OF THE INVENTION

It is therefore an object of this invention to provide a method for manufacturing a nuclear fuel pellet which is capable of reducing the density dispersion between the pellets without producing any toxic gas during the manufacturing processes.

According to a first aspect of this invention, a method of manufacturing a nuclear fuel pellet which is formed by raw material powder of nuclear fuel into a predetermined shape, and sintered, wherein crystal cellulose having thermal resisting property is used as a density lowering agent.

According to a second aspect of this invention, the crystal cellulose in the first aspect has a structural formula as follows:

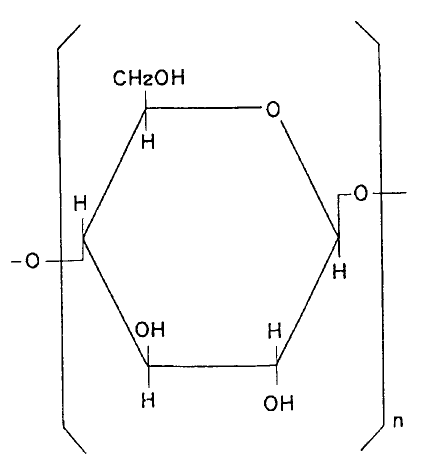

According to a third aspect of this invention, the method in the first aspect comprises a step of adding zinc stearate to the raw material powder as a binder for reinforcing the powder binding.

According to a fourth aspect of this invention, the nuclear fuel pellet in the first aspect is made of uranium oxide.

According to a fifth aspect of this invention, the nuclear fuel pellet in the first aspect is made of plutonium oxide.

According to a sixth aspect of this invention, the nuclear fuel pellet in the first aspect is made of uranium carbide.

According to a seventh aspect of this invention, the nuclear fuel pellet in the first aspect is made of plutonium carbide.

According to an eighth aspect of this invention, the nuclear fuel pellet in the first aspect is made of uranium nitride.

According to a ninth aspect of this invention, the nuclear fuel pellet in the first aspect is made of plutonium nitride.

According to a tenth aspect of this invention, the nuclear fuel pellet in the first aspect is made of a mixture of uranium oxide and plutonium oxide.

According to an eleventh aspect of this invention, the nuclear fuel pellet in the first aspect is made of a mixture of uranium carbide and plutonium carbide.

According to a twelfth aspect of this invention, the nuclear fuel pellet in the first aspect is made of a mixture of uranium nitride and plutonium nitride.

According to the aforementioned method of this invention, since the melting point of the crystal cellulose to be mixed with and added to the raw material powder as a density lowering agent is high, there would arise no quality transformation due to the melting or heat decomposition at the stage of mixing, so that the crystal cellulose could act with optimum performance in reducing the density over the whole mixed powder. As a result, the density distribution of the whole mixed powder is homogenized so as to significantly reduce the dispersion of the density between the pellets to be formed afterwards by compaction and sintering. There is also little risk of producing any toxic gas during the manufacturing process.

The above and other objects, features and advantages of the present invention will become clear from the following description of the preferred embodiment thereof, taken in conjunction with the accompanying drawings.

### BRIEF DESCRIPTION OF THE DRAWINGS

FIG. 1 is one of the example of flow diagram showing a method for manufacturing a nuclear fuel pellet according to this invention;
FIG. 2 is a graph showing a density distribution of a nuclear fuel pellet when a conventional density lowering agent is used;
FIG. 3 is a diagram showing a density distribution of a pellet in the case of using the crystal cellulose of this invention; and
FIG. 4 is a table showing an example of content analyzed values of residual impurities in the case of using the crystal cellulose as a density lowering agent.

### DETAILED DESCRIPTION OF THE PREFERRED EMBODIMENTS

An embodiment of this invention will now be described with reference to the accompanying drawings.

As a significant feature of this invention, crystal cellulose is used as a density lowering agent. This crystal cellulose has a high heat decomposition temperature of approximately 350°C, can be readily spheroidized with certain dimensions, and hardly adsorbs moisture and coagulates, meeting all the aforementioned requirements. The crystal cellulose has a structure formula as shown below, for example.

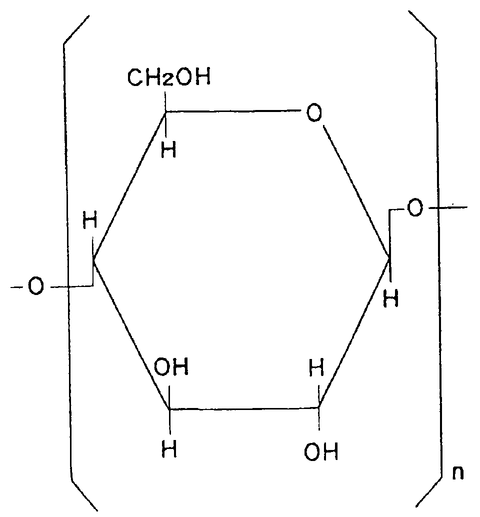

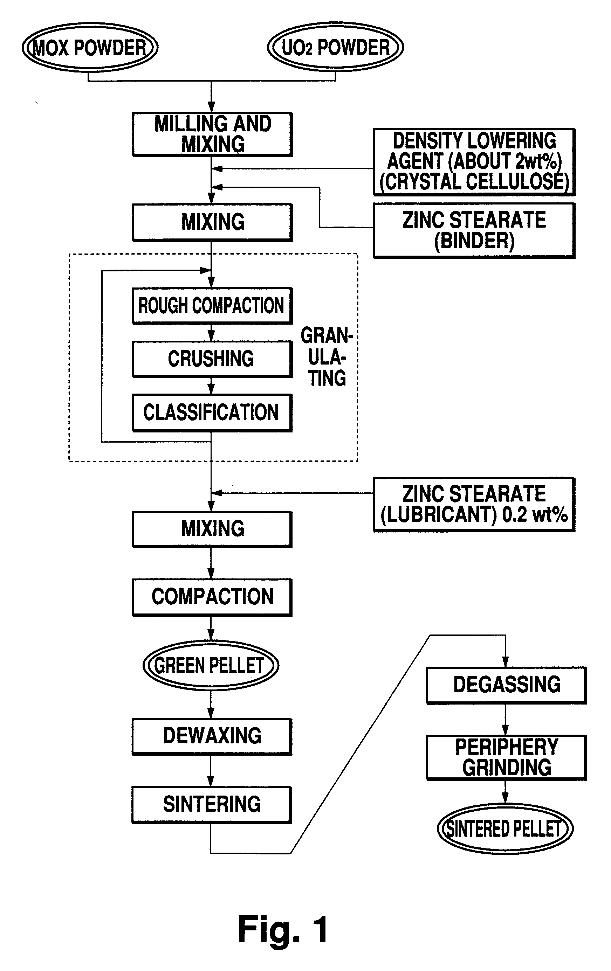

FIG. 1 shows an example of manufacturing processes of a nuclear fuel pellet with 85% T.D. (theoretical density) using such a crystal cellulose. As shown in FIG. 1, after milling and mixing powders of uranium dioxide (UO₂) and mixed oxide fuel (MOX), a density lowering agent and binder are added thereto. In this case, the aforementioned crystal cellulose is used as a density lowering agent and zinc stearate is used as binder. In this case, the term "binder" refers to a material playing a role of paste for enhancing the homogeneous mixing of the powders, and is required for improving the dealing strength in the green pellet stage in the case of mass production.

Subsequently, the process advances to granulating, which comprises three processes, rough-compaction, crushing, and classifying. After zinc stearate is added thereto as a lubricant, mixing and cylindrical-compaction processes are carried out. A so-called green pellet is formed by this compaction process.

After that, a process of dewaxing the green pellet is executed. The dewaxing is operated at a temperature of not lower than approximately 800°C under hydrogen-mixed gas atmosphere. During this dewaxing process, the crystal cellulose as the density lowering agent is thermally decomposed and evaporated for removal. Sintering is then performed for about two hours at approximately 1700°C under an argon-hydrogen mixed gas atmosphere, and further degassing is conducted in a vacuum state at 800°C. Finally, periphery of the sintered pellet is ground to provide a complete product.

In this embodiment, there is used crystal cellulose having been spheroidized with a predetermined grain size which is variable in accordance with the desired size of pore to be formed in the pellet.

The mixing ratio of the crystal cellulose to the raw material powder depends on the properties of the raw material powder (easiness for sintering process) and the density of the produced pellet, but would be approximately 2 wt% when pellets of 85% T.D. are to be produced.

In this case, the term " % T.D." represents a pellet density when the theoretical density (density of the component atoms (U, Pu, O) in a crystal state) is assumed as 100%. For example, the specification of the fast breeder reactor "Monju" is 85% T.D.

As the fuel pellet for the fast breeder reactor, one with a diameter of 5.4 mm and a height of 8 mm is used, while for a light water reactor i.e. commercial power reactor, one with a diameter of 8 mm - 12 mm and a height of approximately 10 mm is used.

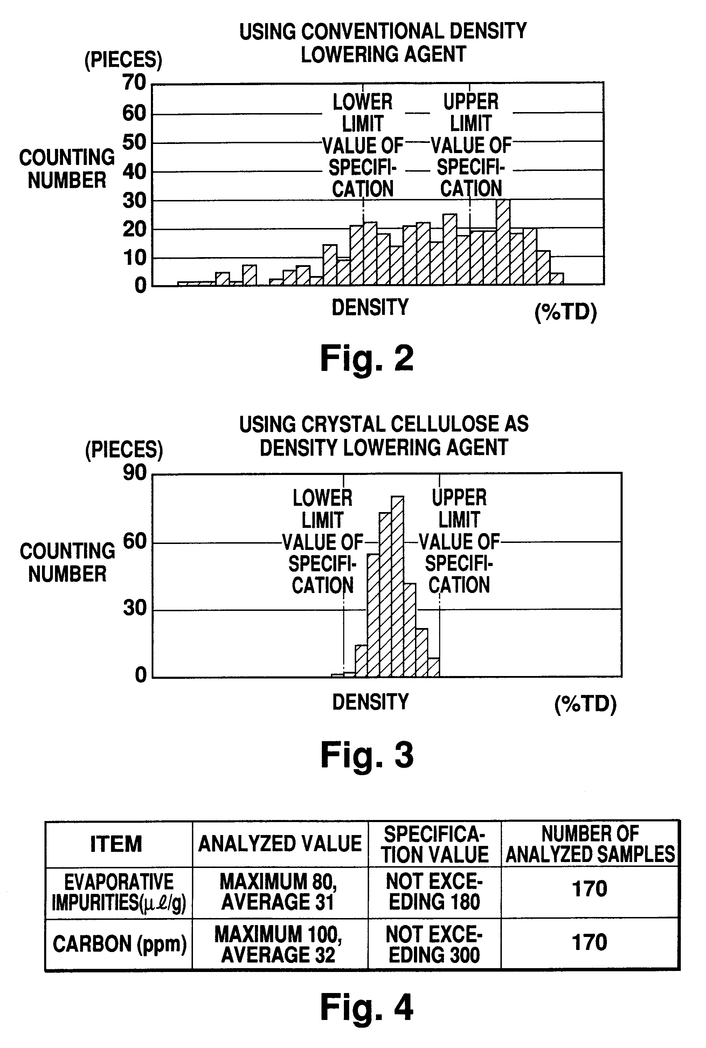

FIGS. 2 and 3 represent density distribution when a conventional wax-type density lowering agent with low heat resistivity and crystal cellulose are used as the density lowering agent for manufacturing pellet, respectively. It is seen from FIG. 2 that the used density lowering agent has low heat resistivity so that the density distribution range of the produced pellet is expanded. Meanwhile, in FIG. 3, the density distribution range of the fuel pellet is quite narrow due to the use of the crystal cellulose, so that almost all the pellets can be included within the standard. Accordingly, the yield of production would become significantly high.

FIG. 4 shows analyzed values found for the amount of impurity that is assumed to have been caused by the contents of the crystal cellulose when pellets for a fast reactor are manufactured using the crystal cellulose as the density lowering agent. As shown in FIG. 4, the maximum and average analyzed values are an excellent 80 (µl/g) and 31 (µl/g) respectively for the specification value of the evaporative impurities being 180 (µl/g). Also for the carbon, the maximum is 100 ppm while the average is 32 ppm for the specification value not exceeding 300 ppm, perfectly clearing the criterion. In FIG. 4, the evaporative impurities contain water, hydrogen carbide, carbon monoxide, carbon dioxide, and nitrogen etc., that evaporate when the pellet is heated at high temperature.

When uranium or plutonium is solely used as the raw material of the nuclear fuel pellet, they will be melted due to the heat generated by the nuclear fission during the operation of the reactor, leading to the destruction of the shape of the nuclear fuel pellet. To cope with that, oxide, carbide and nitride of uranium or plutonium are used as the raw material for the nuclear fuel pellet. By converting the uranium or plutonium into oxide, carbide and nitride, the melting temperature rises more than in simplex, so that the aforementioned undesirable transformation of the pellet caused by the heat of the nuclear fission reaction can be avoided.

In this invention it is also alternatively possible to use a mixture of uranium oxide and plutonium oxide, a mixture of uranium carbide and plutonium carbide, and a mixture of uranium nitride and plutonium nitride, as the raw material of nuclear fuel pellets.

As mentioned above, according to the present invention, since the crystal cellulose is used as the density lowing agent, it is possible to prevent the density lowing agent from transforming in quality by melting or thermally decomposing due to the heat generation or accumulation of the plutonium. As a result, any dispersion of the pellet density can be minimized with less residual impurities.

## Claims

1. A method for manufacturing a nuclear fuel pellet which is formed by sintering raw material powder of nuclear fuel into a predetermined shape, wherein crystal cellulose having heat-resisting property is used as a density lowering agent for forming a number of small pores for accumulating gas therein in the nuclear fuel pellet, thereby performing density control of the pellet.

2. A method according to claim 1, wherein the crystal cellulose has a structural formula as follows:

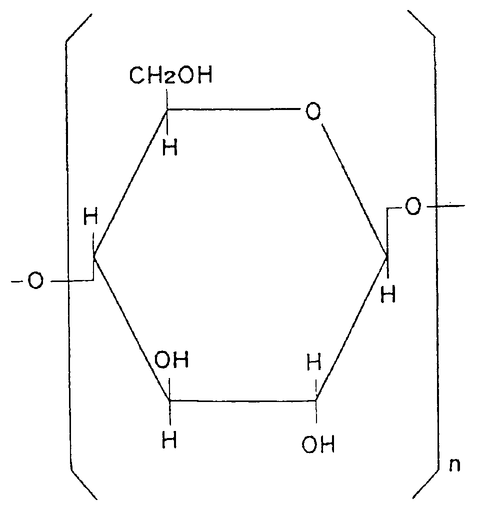

3. A method according to claim 1, wherein zinc stearate is added to the raw material powder as a binder for reinforcing the powder binding.

4. A method according to claim 1, wherein said nuclear fuel pellet is made of uranium oxide.

5. A method according to claim 1, wherein said nuclear fuel pellet is made of plutonium oxide.

6. A method according to claim 1, wherein said nuclear fuel pellet is made of uranium carbide.

7. A method according to claim 1, wherein said nuclear fuel pellet is made of plutonium carbide.

8. A method according to claim 1, wherein said nuclear fuel pellet is made of uranium nitride.

9. A method according to claim 1, wherein said nuclear fuel pellet is made of plutonium nitride.

10. A method according to claim 1, wherein said nuclear fuel pellet is made of a mixture of uranium oxide and plutonium oxide.

11. A method according to claim 1, wherein said nuclear fuel pellet is made of a mixture of uranium carbide and plutonium carbide.

12. A method according to claim 1, wherein said nuclear fuel pellet is made of a mixture of uranium nitride and plutonium nitride.
